# EUROPÄISCHE PATENTSCHRIFT

(11) **EP 2 948 352 B1**
(45) Veröffentlichungstag und Bekanntmachung des Hinweises auf die Patenterteilung: **04.11.2020**
(21) Anmeldenummer: 14714645.0
(22) Anmeldetag: 25.03.2014
(51) Int. Cl.: B60T 13/66

(54) **VORRICHTUNG ZUR STEUERUNG EINER ANTRIEBSEINRICHTUNG BEI EINEM SCHIENENFAHRZEUG**
APPARATUS FOR CONTROLLING A DRIVE DEVICE IN A RAIL VEHICLE
DISPOSITIF PERMETTANT DE COMMANDER UN ORGANE D'ENTRAÎNEMENT D'UN VÉHICULE FERROVIAIRE

(30) Priorität: 28.03.2013 DE 102013205698
(43) Veröffentlichungstag der Anmeldung: 02.12.2015
(73) Patentinhaber: Siemens Mobility GmbH, 81739 München (DE)
(72) Erfinder: WIESAND, Manfred, 90559 Burgthann (DE)
(86) Internationale Anmeldenummer: PCT/EP2014/055944
(87) Internationale Veröffentlichungsnummer: WO 2014/154681

(56) Entgegenhaltungen:
- US-A1- 2007 236 078

## Beschreibung

Die Erfindung betrifft eine Vorrichtung zur Steuerung einer Antriebseinrichtung bei einem Schienenfahrzeug, mit einer Recheneinheit und einer Speichereinheit zum Speichern zumindest eines Moduls eines Antriebsteuerprogramms, wobei dieses Modul dazu vorgesehen ist, zur Durchführung von wenigstens einer Antriebsteuerfunktion von der Recheneinheit ausgeführt zu werden.

Aus Dokument US 2007/236078 A1 ist eine Vorrichtung zur Steuerung einer Antriebseinrichtung bei einem Schienenfahrzeug, mit einer Recheneinheit und einer Speichereinheit zum Speichern eines Moduls eines Antriebsteuerprogramms bekannt.

Der Betrieb eines Schienenfahrzeugs umfasst insbesondere die Steuerung einer Antriebseinrichtung, die dazu dient, in einem Traktionsmodus ein Antriebsdrehmoment zu erzeugen. Die Durchführung von Antriebssteuerfunktionen erfolgt mittels einer Recheneinheit, die entsprechende Module eines Antriebssteuerprogramms ausführt. Bei einer Ausbildung der Antriebseinrichtung mit Elektromotoren und zugehörigen Traktionsstromrichtern besteht eine Antriebssteuerfunktion darin, eine Schaltstrategie der Stromrichterventile zur Erzeugung einer elektrischen Leistung für die Elektromotoren umzusetzen.

Neben der Ausführung einer Antriebssteuerung umfasst der Betrieb eines Schienenfahrzeugs weitere Aspekte, welchen weitere Steuerungsaufgaben zugeordnet sind.

Der Erfindung liegt die Aufgabe zugrunde, eine gattungsgemäße Vorrichtung bereitzustellen, durch welche ein geringer Konstruktionsaufwand bezüglich der Implementierung von Steuerungsfunktionen erreicht werden kann.

Hierzu wird vorgeschlagen, dass die Speichereinheit zum Speichern zumindest eines Moduls eines Bremssteuerprogramms dient, wobei dieses Modul dazu vorgesehen ist, zur Durchführung von wenigstens einer Bremssteuerfunktion für eine Bremseinrichtung des Schienenfahrzeugs von der Recheneinheit ausgeführt zu werden. Hierdurch kann bezüglich der Implementierung von Antriebs- und Bremssteueraufgaben beim Schienenfahrzeug ein besonders geringer Konstruktionsaufwand erreicht werden. Durch die Ausführung von zumindest einer Antriebssteuerfunktion und wenigstens einer Bremssteuerfunktion durch eine gemeinsame Recheneinheit können bei der Konstruktion des Schienenfahrzeugs Bauraum, Kosten und Gewicht eingespart werden. Der Energieverbrauch kann außerdem reduziert werden.

Unter einem "Modul" eines Antriebs- bzw. Bremssteuerprogramms soll insbesondere zumindest ein Bestandteil des Antriebs- bzw. Bremssteuerprogramms verstanden werden, welcher zur Durchführung einer bestimmten Funktion der Antriebs- bzw. Bremssteuerung dient. Das Modul des Antriebssteuerprogramms ist vorzugsweise dazu vorgesehen, zur Durchführung von wenigstens einer Antriebssteuerfunktion in einem Traktionsmodus des Schienenfahrzeugs von der Recheneinheit ausgeführt zu werden. In diesem Traktionsmodus wird die Antriebseinrichtung derart gesteuert, dass sie dazu dient, ein Antriebsdrehmoment zu erzeugen. Das Antriebs- und/oder Bremssteuerprogramm kann aus einem einzigen Modul bestehen oder es kann mehrere Module aufweisen, die jeweils zur Durchführung einer bestimmten Funktion unter einer Vielzahl von Steuerfunktionen vorgesehen sind.

Die Vorrichtung steht zweckmäßigerweise mit einer Einheit in Wirkverbindung, welche Befehlsignale für die Antriebseinrichtung und/oder die Bremseinrichtung ausgibt, wobei die Ausführung der Antriebs- bzw. Bremssteuerfunktion auf der Basis dieser Befehlsignale erfolgt. Insbesondere können diese Befehlsignale durch eine manuelle Betätigung des Schienenfahrzeugführers und/oder automatisch durch ein Steuergerät des Schienenfahrzeugs ausgelöst werden.

Zur Ausführung der Antriebs- und/oder Bremssteuerfunktion kann die Vorrichtung vorteilhafterweise mit einer Einheit in Wirkverbindung stehen, die wenigstens ein Signal bezüglich zumindest eines Betriebsparameters des Schienenfahrzeugs ausgibt. Beispielsweise kann die Einheit ein Signal ausgeben, mit welchem eine Information über die Geschwindigkeit, die Masse usw. des Schienenfahrzeugs als Eingangssignal für die Vorrichtung übermittelt wird.

Die Recheneinheit ist - abweichend von einer gedachten Vereinigung von physikalisch voneinander separaten, insbesondere über das Schienenfahrzeug verteilten Einheiten - zweckmäßigerweise eine zusammenhängende Einheit, die insbesondere zumindest eine Prozessoreinheit aufweist. Insbesondere kann die Recheneinheit zumindest einen Prozessor aufweisen, der als Einzelkernprozessor (oder "Single-Core Processor") oder als Mehrkernprozessor (oder "Multi-Core Processor") ausgebildet sein kann.

Eine kombinierte Ausführung eines Moduls des Antriebssteuerprogramms und eines Moduls des Bremssteuerprogramms durch die Recheneinheit kann mit einer hohen Rechenleistung erfolgen, wenn die Recheneinheit für einen Betrieb mit zumindest zwei Prozessoreinheiten ausgelegt ist, wobei in zumindest einer Betriebsphase dem Modul des Antriebssteuerprogramms und dem Modul des Bremssteuerprogramms jeweils eine unterschiedliche Prozessoreinheit zugewiesen ist. Weist die Recheneinheit einen Einzelkernprozessor auf, sind die Prozessoreinheiten zweckmäßigerweise als logische und/oder dynamisch zuweisbare Prozessoreinheiten ausgebildet. Insbesondere können die Prozessoreinheiten aus einer statischen oder dynamischen Verteilung der Prozessorressourcen für die auszuführenden Module hervorgerufen sein. Weist die Recheneinheit einen Mehrkernprozessor auf, sind die Prozessoreinheiten zweckmäßigerweise jeweils von einem unterschiedlichen Prozessorkern gebildet.

Ist die Bremseinrichtung des Schienenfahrzeugs als Druckluft gesteuerte Einrichtung ausgebildet, kann durch die Recheneinheit eine mit hoher Priorität behaftete und umfangreiche Steueraufgabe einer Bremssteuereinrichtung ausgeführt werden, wenn das Modul des Bremssteuerprogramms zur Ausführung einer Druckluftbremsventilsteuerfunktion vorgesehen ist. Hierbei steht die erfindungsgemäße Vorrichtung zweckmäßigerweise mit zumindest einer Ventileinrichtung der Bremseinrichtung in Wirkverbindung, die dazu dient, den Druck einer zur Betätigung von Bremselementen der Bremseinrichtung dienenden Druckluft zu steuern.

Eine weitere, mit hoher Wichtigkeit behaftete Steueraufgabe einer Bremseinrichtung kann durch die Recheneinheit ausgeführt werden, wenn das Modul des Bremssteuerprogramms zur Ausführung einer Gleitschutzfunktion vorgesehen ist. Hierzu steht die erfindungsgemäße Vorrichtung zweckmäßigerweise mit einer Sensoreinheit in Wirkverbindung, die dazu dient, zumindest eine zu schützende Achse des Schienenfahrzeugs zu überwachen bzw. zumindest eine diese Achse betreffende Kenngröße zu erfassen. Die von der Recheneinheit ausgeführte Gleitschutzfunktion kann darin bestehen, diese Kenngröße und einen über ein Eingangssignal empfangenen Betriebsparameter des Schienenfahrzeugs, insbesondere die Fahrzeuggeschwindigkeit, auszuwerten und ggf. eine Maßnahme mittels der Bremseinrichtung einzuleiten.

Ist die Antriebseinrichtung mit zumindest einem Elektromotor und einem Traktionsstromrichter zur Versorgung des Elektromotors ausgestattet, kann durch die Recheneinheit eine mit hoher Priorität behaftete und umfangreiche Steueraufgabe einer Antriebssteuereinrichtung ausgeführt werden, wenn das Modul des Antriebssteuerprogramms zur Ausführung einer Traktionstromrichtersteuerfunktion vorgesehen ist. Eine vom Modul des Antriebssteuerprogramms, insbesondere in einem Traktionsmodus des Schienenfahrzeugs, durchgeführte Antriebssteuerfunktion kann hierbei vorzugsweise darin bestehen, eine Schaltstrategie der Stromrichterventile zur Erzeugung einer elektrischen Leistung für den zumindest einen Elektromotor umzusetzen.

Die Recheneinheit und zumindest ein Bestandteil der Speichereinheit können in unterschiedlichen, separaten Einrichtungen des Schienenfahrzeugs untergebracht werden. Es kann jedoch eine kompakte Ausführung der Vorrichtung erreicht werden, wenn diese ein Gehäuse aufweist, in welchem die Recheneinheit und die Speichereinheit angeordnet sind.

Außerdem wird vorgeschlagen, dass die Vorrichtung eine Spannungsversorgungseinrichtung aufweist, die zur Versorgung von Gehäusekomponenten vorgesehen ist. Durch eine für die Gehäusekomponenten gemeinsame Spannungsversorgungseinrichtung kann ein geringer Bauraum vorteilhaft erreicht werden.

In einer vorteilhaften Weiterbildung der Erfindung wird vorgeschlagen, dass die Vorrichtung ein Kommunikationsmodul aufweist, das dazu vorgesehen ist, eine Datenkommunikation mit einer Schienenfahrzeugsteuereinheit herzustellen. Das Kommunikationsmodul stellt vorteilhafterweise eine Kommunikationsschnittstelle von zumindest einer Komponente der Vorrichtung, insbesondere deren Recheneinheit, mit einem Datenbus des Schienenfahrzeugs dar, über welchen Daten und Befehle von der Schienenfahrzeugsteuereinheit zu dieser Komponente übertragen werden können.

Die Erfindung geht ferner aus einem Verfahren zur Steuerung einer Antriebseinrichtung bei einem Schienenfahrzeug, bei welchem zumindest eine Antriebsteuerfunktion durch eine Recheneinheit ausgeführt wird.

Es wird vorgeschlagen, dass zumindest eine Bremssteuerfunktion zur Steuerung einer Bremseinrichtung des Schienenfahrzeugs durch die Recheneinheit ausgeführt wird. Zu den vorteilhaften Auswirkungen des Verfahrens wird - um unnötige Wiederholungen zu vermeiden -auf die obigen Ausführungen zur erfindungsgemäßen Vorrichtung verwiesen.

Es wird ein Ausführungsbeispiel der Erfindung anhand der Zeichnungen näher erläutert. Es zeigen:
- Figur 1:: ein Schienenfahrzeug mit Antriebseinrichtungen und einer Bremseinrichtungen,
- Figur 2:: eine der Antriebseinrichtungen und die Bremseinrichtung aus Figur 1 und eine Vorrichtung zur Steuerung der Antriebseinrichtung und der Bremseinrichtung und
- Figur 3:: eine detaillierte Ansicht der Vorrichtung aus Figur 2.

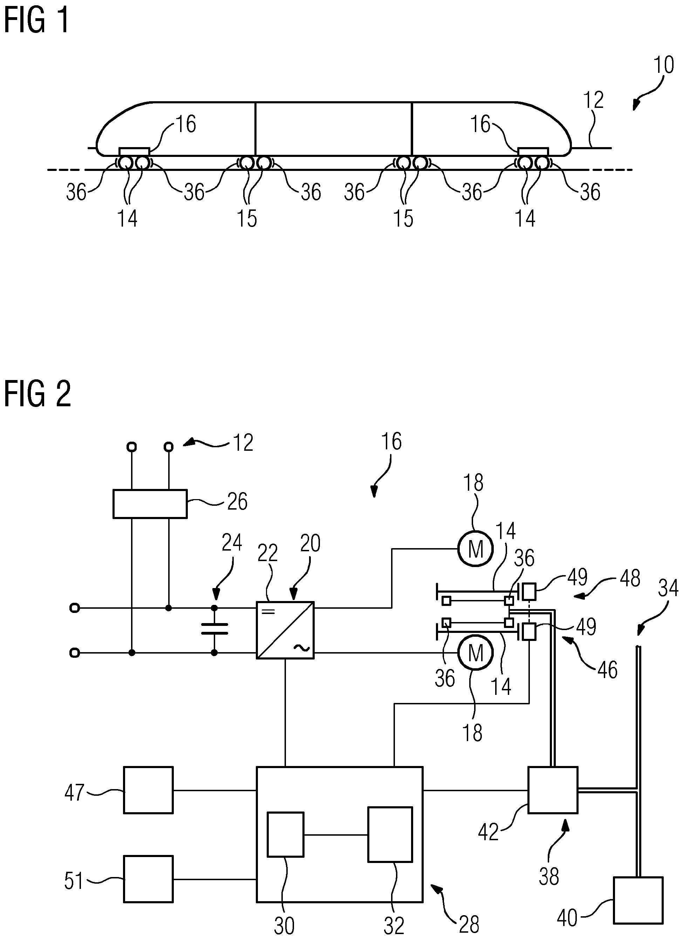

Figur 1 zeigt ein Schienenfahrzeug 10 in einer schematischen Seitenansicht. Im betrachteten Ausführungsbeispiel ist das Schienenfahrzeug 10 als ein elektrisch angetriebener Triebzug ausgebildet, welcher unter einer mittels eines Stromabnehmers abgegriffenen Netzversorgungsspannung betrieben wird. Insbesondere wird die elektrische Netzversorgungsspannung von einer als Stromschiene ausgebildeten Netzspannungsversorgung 12 abgegriffen, wobei die Netzversorgungsspannung insbesondere eine Gleichspannung ist.

In einer weiteren Ausführung kann das Schienenfahrzeug 10 zum Abgreifen der Netzversorgungsspannung aus einer als Oberleitung ausgebildeten Netzspannungsversorgung ausgestattet sein, wobei die Netzversorgungsspannung eine Gleich- oder Wechselspannung sein kann. Ferner kann das Schienenfahrzeug 10 mit einem Generator ausgestattet sein, welcher mittels eines durch einen Treibstoff angetriebenen Motors eine elektrische Spannung bereitstellt.

Das Schienenfahrzeug 10 weist Antriebsachsen 14 auf, die mittels Antriebseinrichtungen 16 antreibbar sind, wobei Paaren von Antriebsachsen 14, die insbesondere zu einem gleichen Drehgestell gehören, jeweils eine separate Antriebseinrichtung 16 zugeordnet ist. Hierbei weisen die Antriebseinrichtungen 16 für jede der zugeordneten Antriebsachsen 14 jeweils einen separaten Elektromotor 18 auf (siehe Figur 2). Außerdem weist das Schienenfahrzeug 10 nicht angetriebene Achsen - auch Laufachsen 15 genannt - auf.

Eine Ausführung einer der Antriebseinrichtungen 16 aus Figur 1 ist in Figur 2 gezeigt.

Die Antriebseinrichtungen 16 weisen die Elektromotoren 18, die jeweils mit einer unterschiedlichen Antriebsachse 14 mechanisch koppelbar sind, und jeweils eine Leistungsversorgungseinheit 20 auf, die dazu vorgesehen ist, in einem Traktionsbetrieb eine elektrische Leistung für die zugeordneten Elektromotoren 18 zu erzeugen. Die gezeigte Leistungsversorgungseinheit 20 umfasst einen Traktionsstromrichter 22, der dem Paar von Elektromotoren 18 zugeordnet ist. In einer alternativen Ausführung kann die Leistungsversorgungseinheit 20 für jeden der ihr zugeordneten Elektromotoren 18 jeweils einen separaten Traktionsstromrichter 22 aufweisen.

Die Leistungsversorgungseinheit 20 bezieht im Traktionsbetrieb eine elektrische Energie aus einem Gleichspannungszwischenkreis 24. Wird - wie in der betrachteten Ausführung - das Schienenfahrzeug 10 unter einer Gleichspannung betrieben, kann der Gleichspannungszwischenkreis 24 wie dargestellt direkt, d.h. ohne Zwischenschaltung einer Spannungsumwandlungsvorrichtung, vom Spannungseingang, d.h. von der Netzspannungsversorgung 12 gespeist werden. Zwischen dem Gleichspannungszwischenkreis 24 und dem Spannungseingang können weitere Einrichtungen, wie insbesondere eine Filtereinrichtung 26, geschaltet sein. Wird das Schienenfahrzeug 10 unter einer als Wechselspannung ausgebildeten Eingangsspannung betrieben, ist zwischen dem Spannungseingang und dem Gleichspannungszwischenkreis 24 eine Spannungsumwandlungsvorrichtung, umfassend beispielsweise einen Transformator und einen Gleichrichter geschaltet, die aus der Eingangsspannung die Gleichspannung des Gleichspannungszwischenkreis 24 bereitstellt.

Der Traktionsstromrichter 22 weist bekannterweise Schaltelemente auf, die gemäß einer bestimmten Schaltstrategie aus der Gleichspannung des Gleichspannungszwischenkreises 24 einen elektrischen Strom zum Speisen der Elektromotoren 18 erzeugen, dessen Charakteristiken an die zu erzeugende Leistung angepasst sind. Die Schaltelemente sind in der fachmännischen Sprache auch unter dem Begriff "Stromrichterventile" bekannt. Die Steuerung der Leistungsversorgungseinheit 20 erfolgt mittels einer Vorrichtung 28, welche steuerungstechnisch mit der Leistungsversorgungseinheit 20 in Wirkverbindung steht. Die Vorrichtung 28 dient insbesondere dazu, Schaltbefehle für die Schaltelemente des zumindest einen Traktionsstromrichters 22 gemäß der Schaltstrategie zu erzeugen. Zur Ausführung dieser Antriebssteuerfunktion, insbesondere dieser Traktionstromrichtersteuerfunktion für die Leistungsversorgungseinheit 20 ist zumindest ein Modul eines Antriebssteuerprogramms vorgesehen, wobei dieses Modul in einer Speichereinheit 30 gespeichert ist und von einer Recheneinheit 32 der Vorrichtung 28 ausführbar ist. Die Vorrichtung 28 ist in der fachmännischen Sprache auch unter dem Begriff "Antriebssteuergerät" (oder ASG) bekannt.

Das Schienenfahrzeug 10 weist ferner eine Bremseinrichtung 34 auf, welche in Figur 1 schematisch dargestellte Reibungsbremselemente 36 umfasst. Diese werden bei der Einleitung eines Bremsvorgangs mittels einer pneumatischen Betätigungseinrichtung 38 betätigt. Die Bremseinrichtung 34 weist hierzu bekannterweise eine Drucklufteinrichtung 40 auf, die zur Betätigung der Reibungsbremselemente 36 Druckluft bereitstellt. Die Betätigung von Reibungsbremselementen 36 erfolgt durch die Steuerung einer diesen Reibungsbremselementen 36 zugeordneten, der pneumatischen Betätigungseinrichtung 38 gehörenden Ventileinrichtung 42, durch welche der Druck der zur Betätigung der Reibungsbremselementen 36 dienenden Druckluft gesteuert werden kann.

In Figur 2 sind die den Elektromotoren 18 zugeordneten Antriebsachsen 14, die diesen zugeordneten Reibungsbremselemente 36 und die Ventileinrichtung 42 zur Betätigung der Reibungsbremselemente 36 dargestellt. Die Vorrichtung 28 ist dazu vorgesehen, eine Bremssteuerfunktion, insbesondere eine Druckluftbremsventilsteuerfunktion auszuführen, bei welcher die den Reibungsbremselementen 36 zugeordnete Ventileinrichtung 42 gesteuert wird. Hierzu ist ein entsprechendes Modul eines Bremssteuerprogramms in der Speichereinheit 30 gespeichert, welches von der Recheneinheit 32 ausführbar ist. Bei der Ausführung des Moduls übernimmt die Vorrichtung 28 eine Funktion einer in der fachmännischen Sprache unter dem Begriff "Bremssteuergerät" (oder BSG) bekannten Einrichtung.

Das Schienenfahrzeug 10 weist außerdem eine Gleitschutzeinrichtung 46 auf. Diese ist mit einer Sensoreinheit 48 ausgestattet, die insbesondere den in Figur 2 dargestellten Antriebsachsen 14 zugeordnet ist. In der betrachteten Ausführung ist die Sensoreinheit 48 von Drehzahlgebern 49 gebildet. Durch einen Vergleich einer von der Sensoreinheit 48 erfassten Kenngröße mit einem Betriebsparameter des Schienenfahrzeugs 10, insbesondere der Fahrzeuggeschwindigkeit, kann ein Gleiten der durch die Sensoreinheit 48 überwachten Achse 14 bei einem Bremsbetrieb erfasst werden, wobei diese Erfassung der Einleitung von entsprechenden Gegenmaßnahmen mittels der Bremseinrichtung 34 zugrunde liegt. Die Vorrichtung 28 ist dazu vorgesehen, eine Gleitschutzfunktion für die Bremseinrichtung 34 auszuführen. Hierbei erfolgt eine Steuerung der Bremseinrichtung 34 auf der Basis zumindest einer durch die Sensoreinheit 48 erfassten Kenngröße. Die Vorrichtung 28 steht hierzu in Wirkverbindung mit der Sensoreinheit 48 und es ist ein Modul des Bremssteuerprogramms in der Speichereinheit 30 gespeichert, welches zur Ausführung der Gleitschutzfunktion von der Recheneinheit 32 ausgeführt wird. Die Vorrichtung 28 steht außerdem mit einem Ausgang einer Einheit 47 in Wirkverbindung, welche ein Signal zum Übermitteln einer Information über den Betriebsparameter, insbesondere die Fahrzeuggeschwindigkeit ausgibt.

Die Vorrichtung 28 steht ferner mit einem Ausgang einer Einheit 51 in Wirkverbindung, die Befehlsignale für die Antriebseinrichtung 16 und/oder die Bremseinrichtung 34 ausgibt, wobei die Ausführung der Antriebs- bzw. Bremssteuerfunktion durch die Vorrichtung 28 auf der Basis dieser Befehlsignale erfolgt. Insbesondere können diese Befehlsignale durch eine manuelle Betätigung des Schienenfahrzeugführers und/oder automatisch durch ein Steuergerät des Schienenfahrzeugs 10 ausgelöst werden.

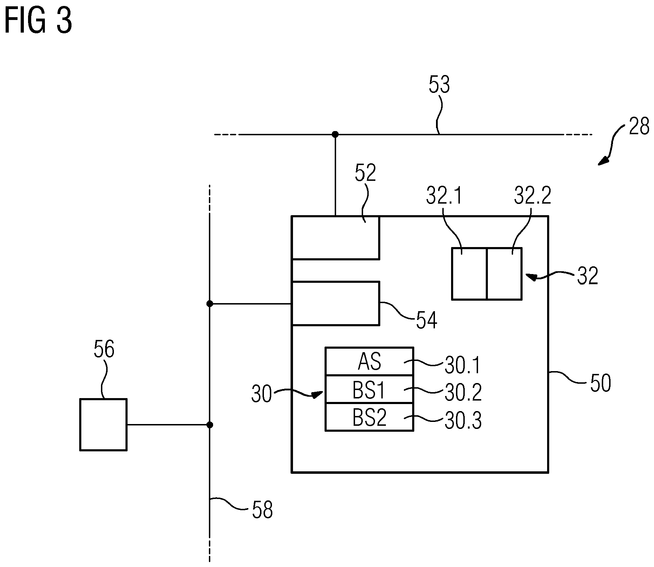

Figur 3 zeigt eine beispielhafte Ausführung der Vorrichtung 28. Komponenten der Vorrichtung 28 sind in einem Gehäuse 50 untergebracht. Im Gehäuse 50 ist insbesondere die Recheneinheit 32 angeordnet, die insbesondere als Multikernprozessor mit zumindest zwei Prozessoreinheiten 32.1 und 32.2 ausgebildet ist. Dabei sind die Prozessoreinheiten 32.1 und 32.2 jeweils von einem unterschiedlichen Prozessorkern gebildet. In einer alternative Ausführung kann die Recheneinheit 32 von einem Einzelkernprozessor gebildet sein, wobei die Prozessoreinheiten 32.1, 32.2 jeweils als logische Prozessoreinheit ausgebildet sind.

Die Speichereinheit 30 weist mehrere Speicherbereiche 30.1, 30.2, 30.3 auf, die jeweils zum Speichern eines unterschiedlichen Moduls vorgesehen sind. Die Bereiche 30.1, 30.2, 30.3 sind insbesondere zum Speichern eines Moduls AS des Antriebssteuerprogramms (z.B. das oben beschriebene Modul zur Ausführung einer Traktionstromrichtersteuerfunktion), eines ersten Moduls BS1 des Bremssteuerprogramms (z.B. das oben beschriebene Modul zur Ausführung einer Druckluftbremsventilsteuerfunktion) bzw. eines zweiten Moduls BS2 des Bremssteuerprogramms zur Ausführung einer Gleitschutzfunktion vorgesehen. Die Prozessoreinheit 32.1 wird vorzugsweise dem Modul AS des Antriebsprogramms zugewiesen, während die Prozessoreinheit 32.2 vorzugweise dem Modul BS1 und/oder BS2 des Bremssteuerprogramms zugewiesen wird. Sind die Prozessoreinheiten 32.1, 32.2 jeweils als logische Prozessoreinheit ausgebildet, sind sie insbesondere durch eine Verteilung der Prozessorressourcen des Einzelkernprozessors hervorgerufen, wobei ein Teil dieser Ressourcen dem Modul AS des Antriebsprogramms und ein anderer Teil der Ressourcen dem Modul BS1 und/oder BS2 des Bremssteuerprogramms zugewiesen werden.

Im Gehäuse 50 ist außerdem eine Spannungsversorgungseinrichtung 52 - auch "Netzteil" genannt - angeordnet, welche die Komponenten des Gehäuses 50 mit elektrischer Spannung versorgt. Die Spannungsversorgungseinrichtung 52 ist insbesondere an ein Bordnetz 53 des Schienenfahrzeugs 10 angeschlossen.

Ferner ist ein Kommunikationsmodul 54 vorgesehen, welches dazu vorgesehen ist, eine Datenkommunikation zwischen zumindest einer Komponente der Vorrichtung 28, insbesondere deren Recheneinheit 32, und einer Schienenfahrzeugsteuereinheit 56 herzustellen. Diese Datenkommunikation erfolgt insbesondere über einen Schienenfahrzeugbus 58, an welchen das Kommunikationsmodul 54 und die Schienenfahrzeugsteuereinheit 56 angeschlossen sind. In der betrachteten Ausführung ist das Kommunikationsmodul 54 im Gehäuse 50 angeordnet. In der fachmännischen Sprache ist das Kommunikationsmodul 54 als "Busanschaltung" genannt. Die Schienenfahrzeugsteuereinheit 56 kann insbesondere als ein zentrales Steuergerät (auch "ZSG" genannt) ausgebildet sein. Die Schienenfahrzeugsteuereinheit 56 und die oben beschriebene Einheit 51 können identisch zueinander, teilweise miteinander einstückig ausgebildet oder voneinander unterschieden sein.

In der Figur sind lediglich die oben genannten Module AS, BS1 und BS2 des Antriebssteuerprogramms und des Bremssteuerprogramms in der Speichereinheit 30 dargestellt. Es können jedoch ein überwiegender Anteil von Modulen, insbesondere sämtliche Module des Antriebssteuerprogramms und des Bremssteuerprogramms in der Speichereinheit 30 gespeichert sein. Bezüglich der Ausbildung der Speichereinheit 30 sind folgende Ausführungen und deren Kombinationen möglich: Die Speicherbereiche der Speichereinheit 30 können als Bereiche eines gleichen physikalischen Speichers oder als separate physikalische Speicher ausgebildet sein; Die Speichereinheit 30 ist in der betrachteten Ausführung im Gehäuse 50 angeordnet, wobei in einer alternativen Ausführung denkbar ist, dass zumindest ein Speicherbereich der Speichereinheit 30 oder die gesamte Speichereinheit 30 außerhalb des Gehäuses 50 angeordnet ist.

In Figur 2 ist ein Zusammenwirken der Vorrichtung 28 mit der Antriebseinrichtung 16 und dem Bestandteil der Bremseinrichtung 34 gezeigt, die einem bestimmten Paar von Antriebsachsen 14, d.h. einem bestimmten Drehgestell zugeordnet sind. Die Vorrichtung 28 ist außerdem zur Ausführung einer Bremssteuerfunktion für nicht gezeigte, den Laufachsen 15 zugeordnete Bremseinrichtungskomponenten vorgesehen. In der in Figur 1 gezeigten Ausführung des Schienenfahrzeugs 10 mit zwei Antriebseinrichtungen 16 können zwei Zughälften definiert werden, wobei für jede Zughälfte jeweils eine Vorrichtung 28 vorgesehen ist. In diesem Fall sind die Vorrichtungen 28 jeweils mit der Antriebseinrichtung 16 und den Bremseinrichtungskomponenten der zugeordneten Zughälfte verbunden. In einer alternativen Ausführung kann die Vorrichtung 28 als zentrale Einheit ausgeführt sein, die mit sämtlichen Antriebseinrichtungen 16 und der gesamten Bremseinrichtung 34 des Schienenfahrzeugs 10 steuerungstechnisch verbunden ist. Es sind jedoch auch alle möglichen anderen Zuordnungen möglich.

## Patentansprüche

1. Schienenfahrzeug mit zumindest einer Antriebseinrichtung (16), die zumindest einen Elektromotor (18) und einen Traktionsstromrichter (22) zur Versorgung des Elektromotors (18) aufweist, einer Bremseinrichtung (34) und einer Vorrichtung (28) zur Steuerung der Antriebseinrichtung (16) und der Bremseinrichtung (34), wobei die Vorrichtung (28) eine Recheneinheit (32) und eine Speichereinheit (30) aufweist, in welcher zumindest ein Modul (AS) eines Antriebsteuerprogramms gespeichert ist, wobei mittels dieses Moduls (AS) eine Traktionsstromrichtersteuerfunktion von der Recheneinheit (32) ausgeführt wird,
und wobei in der Speichereinheit (30) ferner zumindest ein Modul (BS1, BS2) eines Bremssteuerprogramms gespeichert ist, wobei mittels dieses Modul (BS1, BS2) eine Druckluftbremsventilsteuerfunktion und/oder eine Gleitschutzfunktion von der Recheneinheit (32) ausgeführt wird.

2. Schienenfahrzeug nach Anspruch 1,
**dadurch gekennzeichnet, dass**
die Recheneinheit (32) für einen Betrieb mit zumindest zwei Prozessoreinheiten (32.1, 32.2) ausgelegt ist, wobei in zumindest einer Betriebsphase dem Modul (AS) des Antriebssteuerprogramms und dem Modul (BS1, BS2) des Bremssteuerprogramms jeweils eine unterschiedliche Prozessoreinheit (32.1, 32.2) zugewiesen ist.

3. Schienenfahrzeug nach einem der vorhergehenden Ansprüche,
**gekennzeichnet durch**
ein Gehäuse (50), in welchem die Recheneinheit (32) und die Speichereinheit (30) angeordnet sind.

4. Schienenfahrzeug nach Anspruch 3,
**gekennzeichnet durch**
eine Spannungsversorgungseinrichtung (52), die zur Versorgung von Gehäusekomponenten vorgesehen ist.

5. Schienenfahrzeug nach einem der vorhergehenden Ansprüche,
**gekennzeichnet durch**
ein Kommunikationsmodul (54), das dazu vorgesehen ist, eine Datenkommunikation mit einer Schienenfahrzeugsteuereinheit (56) herzustellen.

6. Verfahren zur Steuerung einer Antriebseinrichtung (16) bei einem Schienenfahrzeug (10), die zumindest einen Elektromotor (18) und einen Traktionsstromrichter (22) zur Versorgung des Elektromotors (18) aufweist, wobei zumindest eine Antriebsteuerfunktion durch eine Recheneinheit (32) ausgeführt wird,
**dadurch gekennzeichnet, dass**
zumindest eine Bremssteuerfunktion zur Steuerung einer Bremseinrichtung (34) des Schienenfahrzeugs (10) durch die Recheneinheit (32) ausgeführt wird, wobei von der Recheneinheit (32) eine Traktionstromrichtersteuerfunktion und eine Druckluftbremsventilsteuerfunktion und/oder eine Gleitschutzfunktion ausgeführt werden.

## Claims

1. Rail vehicle comprising at least one drive device (16) which has at least one electric motor (18) and one traction power converter (22) for supplying the electric motor (18), comprising a brake device (34) and comprising an apparatus (28) for controlling the drive device (16) and the brake device (34), wherein the apparatus (28) has a computer unit (32) and a memory unit (30) in which at least one module (AS) of a drive control program is stored, wherein a traction power converter control function is executed by the computer unit (32) by means of this module (AS),
and wherein at least one module (BS1, BS2) of a brake control program is further stored in the memory unit (30), wherein a compressed-air brake valve control function and/or a sliding-prevention function are/is executed by the computer unit (32) by means of this module (BS1, BS2).

2. Rail vehicle according to Claim 1,
**characterized in that**
the computer unit (32) is designed for operation with at least two processor units (32.1, 32.2), wherein, in at least one operating phase, a different processor unit (32.1, 32.2) is in each case allocated to the module (AS) of the drive control program and to the module (BS1, BS2) of the brake control program.

3. Rail vehicle according to either of the preceding claims,
**characterized by**
a housing (50) in which the computer unit (32) and the memory unit (30) are arranged.

4. Rail vehicle according to Claim 3,
**characterized by**
a voltage supply device (52) which is provided for supplying housing components.

5. Rail vehicle according to one of the preceding claims,
**characterized by**
a communication module (54) which is provided for the purpose of establishing data communication with a rail vehicle control unit (56).

6. Method for controlling a drive device (16) in a rail vehicle (10), which drive device has at least one electric motor (18) and one traction power converter (22) for supplying the electric motor (18), wherein at least one drive control function is executed by a computer unit (32),
**characterized in that**
at least one brake control function for controlling a brake device (34) of the rail vehicle (10) is executed by the computer unit (32), wherein a traction power converter control function and a compressed-air brake valve control function and/or a sliding-prevention function are executed by the computer unit (32).

## Revendications

1. Véhicule ferroviaire ayant au moins un dispositif (16) d'entraînement, qui a au moins un moteur (18) électrique et un onduleur (22) de traction pour l'alimentation du moteur (18) électrique, un dispositif (34) de freinage et un système (28) de commande du dispositif (16) d'entraînement et du dispositif (34) de freinage, le système (28) ayant une unité (32) informatique et une unité (30) de mise en mémoire, dans laquelle au moins un module (AS) d'un programme de commande d'entraînement est mis en mémoire, dans lequel, au moyen de ce module (AS), une fonction de commande de l'onduleur de traction est réalisée par l'unité (32) informatique,
et dans lequel il est mis en mémoire, en outre, dans l'unité (30) de mise en mémoire, au moins un module (BS1, BS2) d'un programme de commande de freinage, dans lequel, au moyen de ce module (BS1, BS2), une fonction de commande de soupape de frein à air comprimé et/ou une fonction d'anti-enrayage est réalisée par l'unité (32) informatique.

2. Véhicule ferroviaire suivant la revendication 1,
**caractérisé en ce que**
l'unité (32) information est conçue pour un fonctionnement avec au moins deux unités (32.1, 32.2) de processeur, dans lequel, dans au moins une phase de fonctionnement, respectivement, une unité (32.1, 32.2) de processeur différente est affectée au module (AS) du programme de commande d'entraînement et au module (BS1, BS2) du programme de commande de freinage.

3. Véhicule ferroviaire suivant l'une des revendications précédentes,
**caractérisé par**
un boîtier (50), dans lequel l'unité (32) informatique et l'unité (30) de mise en mémoire, sont disposées.

4. Véhicule ferroviaire suivant la revendication 3,
**caractérisé par**
un dispositif (52) d'alimentation en tension, qui est prévu pour l'alimentation de composants du boîtier.

5. Véhicule ferroviaire suivant l'une des revendications précédentes,
**caractérisé par**
un module (54) de communication prévu pour établir une communication de données avec une unité (56) de commande du véhicule ferroviaire.

6. Procédé de commande d'un dispositif (16) d'entraînement dans un véhicule (10) ferroviaire, qui a au moins un moteur (18) électrique et un onduleur (22) de traction pour l'alimentation du moteur (18) électrique, au moins une fonction de commande de l'entraînement étant réalisée par une unité (32) informatique,
**caractérisé en ce que**
l'on réalise, par l'unité (32) informatique, au moins une fonction de commande de freinage pour la commande d'un dispositif (34) de freinage du véhicule (10) ferroviaire, dans lequel on réalise, par l'unité (32) informatique, une fonction de commande d'onduleur de traction et une fonction de commande de soupape de frein à air comprimé et/ou une fonction d'anti-enrayage.
